# EUROPEAN PATENT SPECIFICATION

(11) **EP 2 484 549 B1**
(45) Date of publication and mention of the grant of the patent: **05.06.2013**
(21) Application number: 12000828.9
(22) Date of filing: 08.02.2012
(51) Int. Cl.: B60N 2/28

(54) **A child seat**
Kindersitz
Siège enfant

(30) Priority: 08.02.2011 US 201161440660 P
(43) Date of publication of application: 08.08.2012
(73) Proprietor: Graco Children's Products Inc., Atlanta, GA 30328 (US)
(72) Inventor: Runk, Kelly, Pequea 17565 PA (US); Binotto, Marco, 92120 Montrouge (FR)
(74) Representative: Metten, Karl-Heinz

(56) References cited:
- US-A- 6 030 047
- US-A1- 2010 133 888

## Description

This application is related to and claims priority benefit of U.S. provisional patent application Serial No. 61/440,660 filed February 8, 2011 and entitled "A Child Car Seat and Adjustable Head Support."

The present disclosure is generally directed to a child seat, in particular to child car seats, and more particularly to an adjustable head support for use with a child car seat or safety seat.

Children's car seats are known in the art and generally have a hard plastic shell covered in padded soft goods. The typical seat also has a safety harness for securing a child in the seat. The harness arrangement is configured to retain a child occupant in the seat during use, especially in the event of a vehicle crash. The car seat usually has a seating area contoured to receive a child in a seated position.

The seat back of the child car seat has an upper portion that is typically wide enough to accommodate the shoulders of a child occupant. Due to the width, the upper portion of the seat back may permit a smaller child's head to move left and right excessively. Excessive lateral or side-to-side movement of a child's head can cause injury in the event of an emergency maneuver or a vehicle accident, especially during a side impact event. A child's head and neck can also move excessively even while the child is relaxed in the seat, such as while they sleep. Such excessive movement is especially undesirable in the case of younger children who could be more prone to injury.

Soft padded head supports in the form of neck stabilizers or soft head supports are known in the art. Such head supports can be added to the seat back to help address the above issues. These types of soft head supports are sometimes available with car seats and sometimes provided separately as an add-on accessory for a car seat that lacks such a soft, padded head support. These types of head supports or pads can provide some degree of support, but
A child seat according to the preamble of claims 1 and 14 is disclosed in US 6030047-B. typically add little rigidity or stiffness. As a result, these types of padded head supports may have a limited ability to control the sudden movement of a child's head in the event of a vehicle crash. In addition, positioning these types of head support accessories properly can be difficult when trying to accommodate children of different size that might sit in the seat.

In one embodiment according to the teachings of the present invention, a child seat has a seat back portion and a series of slots, e.g. 2, 3, 4, 5 or more slots, formed through the seat back portion and spaced vertically apart from one another. The child seat also has a safety harness with a pair of shoulder belts positioned on a front side of the seat back portion and a head support having a mounting strap. The shoulder belts are threaded through one or more selected slots of the series of slots to a back side of the seat back portion. The head support is removably attached to the seat back portion with the mounting strap threaded through one or more chosen slots of the series of slots. Slots of a series of slots which are spaced vertically apart in the meaning of the invention do not necessarily have to lie on a straight line having an absolute vertical orientation, but this just shall give guidance as to the general relative orientation of a series of slots. For example, two, three or more slots forming or belonging to the series of slots may be transversely displaced but are still spaced vertically apart as long as these are at different levels vertically.

In one example, each slot of the series of slots can include a pair of side-by-side spaced apart slots.

In one example, the child seat can be a car seat or vehicle safety seat for a child.

In one example, the shoulder belts can each be threaded though one of a first pair of side-by-side slots.

In one example, the head support can have a pair of the mounting straps and each of the pair of mounting straps can be threaded through one of a second pair of side-by-side slots directly above a first pair of side-by-side slots through which the shoulder straps are threaded.

In one example, the head support can have two of the mounting straps.

In one example, the head support can have two of the mounting straps which can be joined to one another on the back side of the seat back portion when the head supported is secured to the seat back portion.

In one example, the head support can have two of the mounting straps which can be joined to the seat back portion but not to one another when the head support is secured to the seat back portion.

In one example, the head support can have two of the mounting straps which can be wrapped at least partly around a bar on the back side of the seat back portion.

In one example, the head support can have two of the mounting straps. One of the two mounting straps can carry a ring on its free end and the other of the two mounting straps can carry a fastening mechanism. The other strap can be threaded through the ring and secured to itself.

In one example, the mounting strap can be secured using a fastening mechanism in the form of or comprising a hook and loop fastener. The hook part and the loop part of such a fastener can each be carried on the mounting strap.

In one example, the head support can have a substantially rigid inner core and a soft goods cover removably received over the inner core.

In one example, wherein the mounting strap can be connected to a soft goods cover on the head support.

In another embodiment according to the teachings of the present invention, a child seat has a seat back portion and a safety harness with a pair of shoulder belts positioned on a front side of the seat back portion. A head support is separate from the seat back portion. The shoulder belts are height adjustable vertically along the seat back portion. The head support is removably attached to the seat back portion with a mounting strap and vertically adjustable positionally along a front side of the seat back portion.

In one example, the mounting strap can be a guide strap coupled to a central region on the front side of the seat back portion. The head support can be slidable up and down along the guide strap.

In one example, the mounting strap can be a guide strap coupled to a central region on the front side of the seat back portion and received through slots or channels formed in a back side of the head support. The head support can be slidable up and down along the guide strap.

In one example, the head support can be retained in a selected position by a hook and loop fastening mechanism carried in part on the seat back portion and in part on a back side of the head support.

In one example, the mounting strap can include two mounting straps on a back side of the head support.

In one example, the seat back portion can have a series of slots formed through the seat back portion and spaced vertically apart from one another. The shoulder belts can be threaded through one or more selected slots of the series of slots to a back side of the seat back portion. The mounting strap can include two mounting straps on the head support threaded through one or more chosen slots of the series of slots directly above the one or more selected slots.

In one example, the seat back portion can have a series of slots formed through the seat back portion and spaced vertically apart from one another. The mounting strap can include two or more straps threaded through one or more chosen slots of the series of slots to a back side of the seat back portion.

Objects, features, and advantages of the present invention will also become apparent upon reading the following description in conjunction with the drawing figures, in which:

FIG. 1 shows a perspective view of one example of a child car seat in accordance with the teachings of the present invention and with a head support in a lowered position.

FIG. 2 shows the child car seat of FIG. 1 with the head support in an intermediate raised position.

FIG. 3 shows a rear view of the head support of FIGS 1 and 2 after being removed from the child car seat.

FIG. 4 shows the child car seat of FIGS. 1 and 2 with the head support removed but ready for installation.

FIG. 5 shows a rear view of the child car seat of FIG. 4 with the head support partly installed in the raised position of FIG. 2.

FIG. 6 shows the child car seat of FIG. 5 with the head support completely installed in the raised position.

FIG. 7 shows a rear view of the child car seat of FIG. 1 with the head support in the lowered position.

FIG. 8 shows the head support of FIG. 3 with a fabric cover partly removed.

FIG. 9 shows the head support of FIG. 8 with the fabric cover completely removed.

FIG. 10 shows a rear view of another example of a head support for a child car seat and constructed in accordance with the teachings of the present invention.

FIG. 11 shows a rear view of the seat back on a child car seat with the head support of FIG. 10 installed.

FIG. 12 shows a perspective view of another example of a child car seat and head support constructed in accordance with the teachings of the present invention and with the head support removed.

FIG. 13 shows a cross-section of the child car seat and head support of FIG. 12 with the head support installed.

FIG. 14 shows a perspective view of another example of a head support for a child car seat and constructed in accordance with the teachings of the present invention.

The child car seat and head supports disclosed herein solve or improve upon one or more of the above-noted and/or other problems and disadvantages with prior known child car seats. In one example, a disclosed head support can be vertically adjusted positionally along the seat back of a child car seat. In one example, a disclosed head support can be removable from the child car seat. In one example, a disclosed head support has a relatively stiff or rigid core and a removable fabric cover. The disclosed head supports can be vertically adjusted to accommodate different sized children seated in the child car seat. When used, the disclosed head supports define a smaller side-to-side spacing so that the head of a smaller child can be adequately supported when using the child car seat. When not used, the disclosed head supports can be stowed and the child car seat can be utilized without the head supports. These and other objects, features, and advantages of the present invention will become apparent upon reading this disclosure.

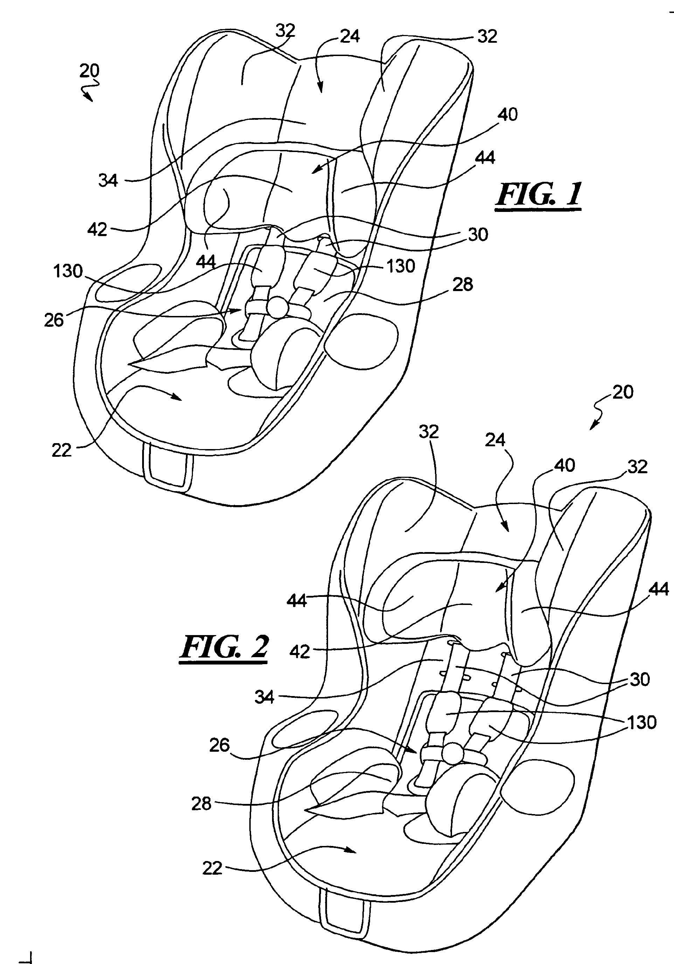

Turning now to the drawings, FIGS. 1 and 2 show one example of a child car seat 20 constructed in accordance with the teachings of the present invention. In this example, the car seat 20 can have, though not specifically shown in detail, a plastic shell and fabric soft goods covering the shell, as is known in the art. The car seat 20 generally has a seat bottom portion 22 and an upstanding seat back portion 24. The car seat 20 also has a safety harness 26 as is known in the art. As depicted in FIGS. 1 and 2, the seat also has an optional, removable infant pad 28 that rests in the seat bight region of the car seat 20. The infant pad can be utilized to provide additional support for a smaller child or infant seated in the seat. The infant pad 28 can be removed when not utilized, whether not desired or not required. The infant pad 28 can be utilized herein in conjunction with the disclosed head supports and be removed when the head supports are not used. Though the safety harness 26 is depicted only generically herein, the harness includes a pair of shoulder belts 30 that extend upward along the seat back portion 24 as is known in the art.

In a disclosed example, the car seat 20 has a pair of side wings 32 that extend upward along and forward relative to the seat back portion 24. The side wings 32 are spaced apart a sufficient distance to accommodate the head and shoulders of the largest sized child for which the car seat is designed and intended. This distance between the side wings 32 is very often too large for infants and smaller children. Specifically, the side wings 32 are intended, in part, to provide support for the seat occupant's head, and particularly during a side impact crash. If the distance between the side wings 32 is too great for some children, the crash safety performance of the seat may not be optimal or even satisfactory.

In the disclosed example, the car seat 20 has a head support 40 that is mountable to, removable from, and independent or separate from the seat back portion 24. The disclosed head support 40 can be mounted directly to the seat back portion 24 between the side wings 32. The head support can be designed to fit snuggly and precisely between the side wings 32 to reduce the spacing between the side wings so that the car seat 20 can better provide adequate safety for smaller children. Thus, the head support 40 in this example has a central portion 42 that can lie against a front side 34 on the seat back portion 24. The head support 40 also has a pair of wing sections 44 that extend forward from the opposite ends of the central portion 42. The wing sections 44 lie against the side wings 32 of the seat back portion 24 during use. The wing sections 44 reduce the distance between the side wings 32 of the seat back portion 24 in order to accommodate smaller children. The wing sections 44 thus limit the distance that the smaller child's head might otherwise travel when the head support 40 is mounted to the car seat 20.

As discussed below in more detail, the head support 40 is removable from the seat back portion 24 and can be vertically adjusted positionally along the seat back portion to further accommodate different sized children. This is generally illustrated in FIGS. 1 and 2 where the head support 40 is shown in a lowered or lower most position in FIG. 1 and an intermediate raised position in FIG. 2. As will become evident upon reading this disclosure, the head support 40 may also be positioned in an uppermost raised position and one or more other intermediate positions between the lowered and uppermost raised positions. The head support 40 is securable to the seat back portion via one or more mounting straps. Various iterations of such mounting straps and mounting arrangements are disclosed and described herein below.

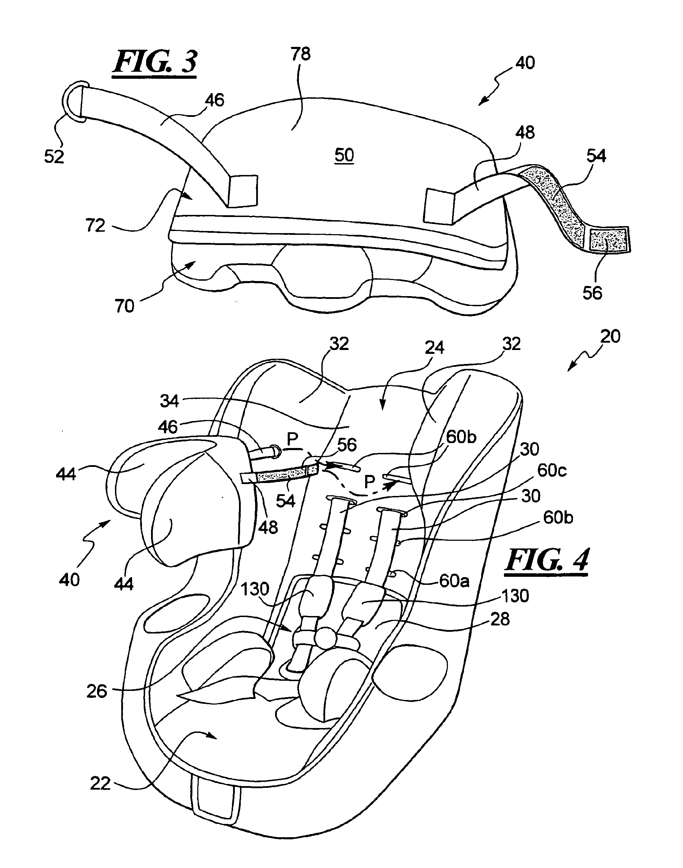

FIG. 3 shows a rear view of the head support 40 having two mounting straps. In this example, two fabric straps 46 and 48 form the mounting straps and are secured to and protrude from the back side 50 of the head support 40. The fabric straps 46 and 48 can be sewn to an outer material of the head support 40 (see below) or can be secured to the outer material or an internal core material (see below) of the head support in any other suitable means. In this example, the fabric straps 46 and 48 are spaced laterally apart from one another on the back side 50. The fabric strap 46 in this example has a ring or hoop 52 secured to its free end. The fabric strap 48 in this example carries both parts of a hook and loop type fastener mechanism thereon. As shown, a strip of loop material 54 is sewn or otherwise attached or adhered to a surface of the fabric strap 48. A patch of hook material 56 is also sewn or otherwise attached or adhered to the same surface of the fabric strap 48 adjacent the loop material strip 54. As described below, the fabric straps 46 and 48 are used to removably secure the head support 40 to the seat back portion 24.

FIG. 4 shows the child car seat 20 with the head support 40 removed. As is known in the art, the car seat 20 can be provided with a series of safety harness slots formed through and vertically spaced from one another along the seat back portion 24. In this example, the series of slots includes first, second, third, and fourth side-by-side pairs of the slots 60a, 60b, 60c, and 60d. Each slot of each pair of slots is provided to accommodate a corresponding one of the shoulder belts 30 of the safety harness 26 at optionally different heights. As is also known in the art, the length and height of the safety harness 26 can be adjusted to accommodate different sized children. The shoulder belts 30 can be threaded through the lower most or first pair of the slots 60a to accommodate a small child seated in the seat, as shown in FIG. 1. The shoulder belts 30 can be re-threaded through any of the other pair of slots including the intermediate second (lower) pair of slots 60b (see FIG. 2), the intermediate third (upper) pair of the slots 60c, or the uppermost fourth pair of the slots 60d see FIGS. 4-6). The user can select the appropriate pair of the slots from the series in the seat back portion 24 to accommodate different sized children or to accommodate the same child as the child grows. The car seat 20 can be provided with either more or less than the series of four pairs of slots 60a-60d of the disclosed example, if desired.

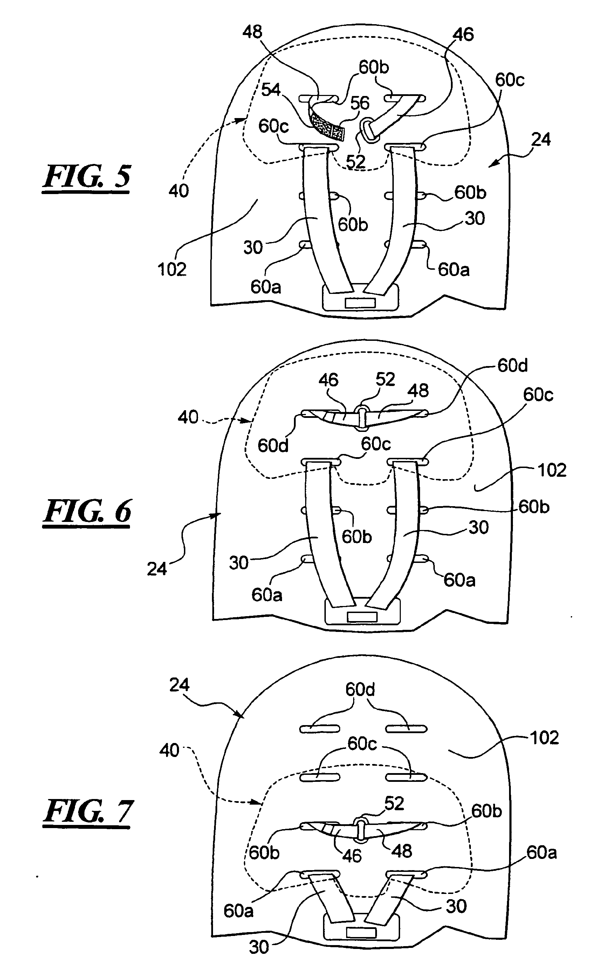

With reference to FIG. 4, the user can set up the car seat 20 to accommodate a child of a particular size. In this example, the user can select the uppermost pair of slots 60d for securing the head support 40 to the car seat. To place the shoulder belts 30 at the correct height for the seat occupant, the user can then thread the shoulder belts 30 through the next highest pair of slots 60c as shown. To mount the head support 40, the user can thread the strap 46 through the left-hand one of the slots 60d and can thread the strap 48 through the right-hand one of the slots 60d as shown in FIG. 5. The user can then pull the straps 46 and 48 completely through the slots 60d in the direction of the arrows P shown in FIG. 4. To secure the head support 40 in a selected position, the user can then thread the free end of the strap 48 through the ring or hoop 52 of the strap 46. The user can then fold over the free end of the strap 48 onto itself to secure the hook patch 56 to the loop strip 54 on the strap 46 as shown in FIG. 6. To remove the head support, the user can reverse the sequence of steps. Specifically, the user can release the hook patch 56 from the loop strip 44, withdraw the strap 48 from the ring or hoop 52, and then pull the head support 40 away from the seat back in the direction opposite the arrows P shown in FIG. 4. This will withdraw the straps 46, 48 from the slots 60d.

The user can select any one of the series of slots through which to thread the shoulder belts 30. If the user needs to utilize the uppermost pair of slots 60d for the shoulder straps 30, the head support 40 cannot be installed. However, the child is likely large enough that the head support 40 is no longer required. Thus, there are no additional slots in the seat back portion 24 to accommodate the head support 40 with the shoulder belts at this elevation. Likewise, the user cannot select the lower most pair of slots 60a through which to thread the straps 46 and 48 of the head support 40. If this were done, there would be no proper set of slots through which to thread the shoulder belts 30. If the shoulder belts 30 are threaded through the same slots as the head support straps 46, 48 in this example, the shoulder belts would be positioned at an elevation that is too high for the head support position. Thus, if the user requires the shoulder belts 30 to be threaded through the lower most pair of slots 60a to accommodate a smaller child or infant, straps 46 and 48 should be threaded through the second lowest pair of slots 60b as shown in FIGS. 1 and 7. This lower most head support position is depicted in FIG. 1 and is described herein as the lowered position. The upper most head support position is depicted in FIGS. 4-6.

The position of the straps 46, 48 on the head support can be determined so that the straps, when threaded through a pair of the slots, correctly positions the head support 40 relative to the shoulder straps. This system can thus make it easy for a user to properly set up the car seat with proper head support and shoulder strap positioning to accommodate a particular child.

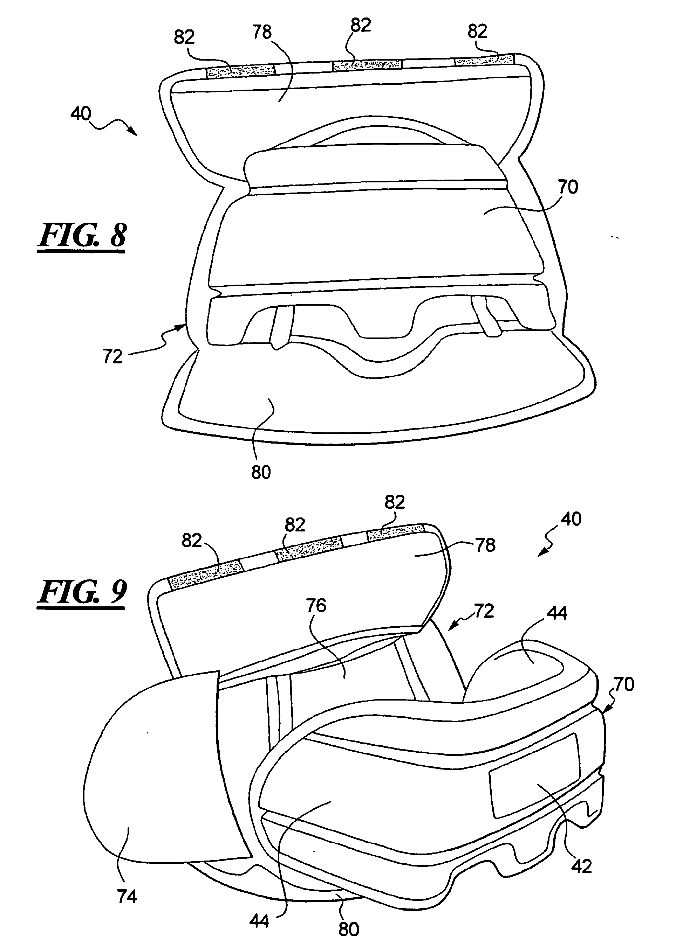

In the disclosed example, the head support 40 has a core or substantially rigid shell 70 and a removable fabric cover 72 as shown in FIGS. 8 and 9. The core can be made from plastic, engineered foam, or the like. The core 70 can also be made from two or more materials in various layers or configurations, if desired, to produce specific crash, energy absorbance, and/or impact performance characteristics.

In this example, the straps 46 and 48 can be sewn to the fabric cover 72 so that the straps would be removed from the core or shell 70 along with the cover. Generally, the core or shell 70 is formed so as to structurally to define the central portion 42 and wing sections 44 of the shape of the head support 40. To accommodate the shape, the fabric cover has a pair of pockets 74 on its free ends and a central panel 76 between and connecting the two pockets. The pockets 74 are open and accessible on the rear side of the central panel 76. An upper flap 78 and a lower flap 80 extend upward and downward, respectively, from top and bottom edges of the central panel 76 in this example. The flaps 78 and 80 can be joined to one another on the back side 50 of the head support 40 when the head support is assembled. The flaps 78, 80 can be joined using any suitable fastening device or mechanism including a zipper, buttons, snaps, or the like. In one example, hook and loop fastener mechanism patches or zones 82 can be used, though only a portion of such zones are shown on the upper flap 78 in FIGS. 8 and 9.

To assemble the head support 40, the wing sections 44 of the core or shell 70 can be inserted into the pockets 74 as represented in FIG. 9. The lower flap 80 can then be flipped upwards over the back of the core 70. The upper flap 78 can be flipped downward onto the back of the core 70, overlapping the lower flap 82. The hook and loop patches 82 can then be secured to like or complementary patches (not shown) on the lower flap to secure the cover 72 in place over the core or shelf 70. The rigid core or shell 70 can provide impact resistance and energy absorption to enhance the safety of the car seat 20. The cover 72 can be removed and washed as needed or can be replaced to alter the aesthetics of the car seat 20.

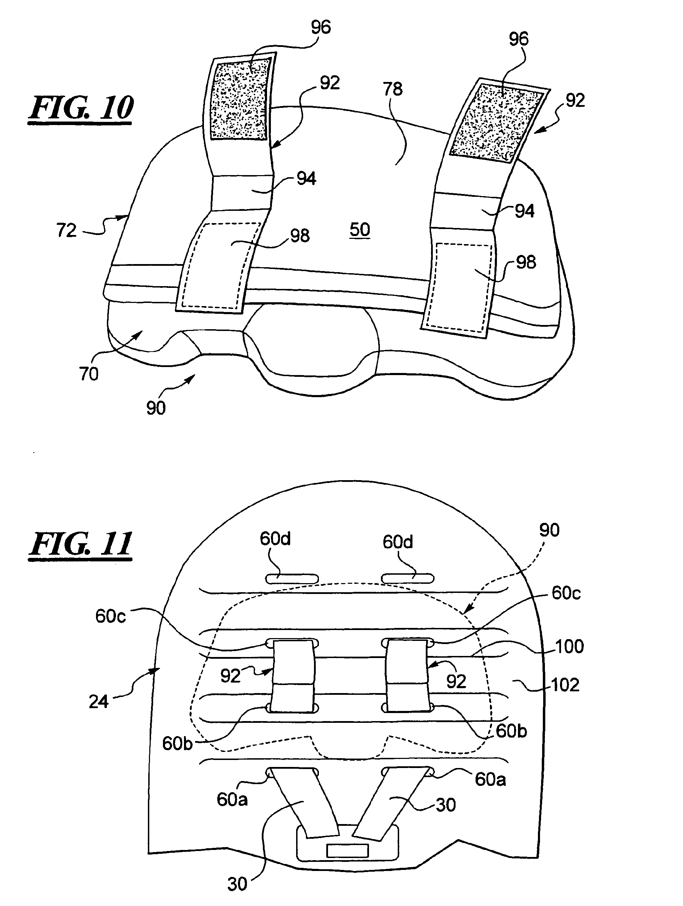

FIGS. 10 and 11 show another example of a head support 90 that can be removably secured on the car seat 20. In this example, the head support 90 is nearly identical in construction to the head support 40 as described above. Thus, like reference numerals refer to like parts among the various embodiments. However, the straps 46 and 48 in the prior example have been replaced by alternate mounting straps in this example. The mounting straps in this example include straps 92 that remain independent of one another when the head support 90 is installed. In this example, each strap 92 is arranged or oriented vertically and has a mid-portion 94 that is sewn or otherwise attached to the cover 72 on the back side 50 of the head support 90. One end of each strap 92 is positioned above the mid-portion 94 and has a loop part 96 of a hook and loop fastener mechanism attached thereto. The other end of each strap 92 is positioned below the mid-portion 94 and has a hook part 98 of the hook and loop fastener mechanism attached thereto.

In this example, the one end of each strap 92 is threaded through a corresponding one of a pair of the slots, such as the third or upper intermediate slots 60c in the seat back portion 24. The other end of each strap 92 is threaded through the next lower pair of the slots such as the second or lower intermediate slots 60b in the seat back portion 24. The loop part 96 and hook part 98 on each strap are then secured to one another as shown in FIG. 11.

Depending on the positioning of the straps 92 on the cover 72, the head support 90 in this example may limit the number of alternate positions that the head support can be secured to the seat back portion 24. This is because the straps 92 each require two pairs of the slots in the series of slots for installation on the seat back portion. It is possible to position the straps 92 on the cover 72 such that the lower end of each strap 92 should be or could be threaded through the same pair of slots as the shoulder belts 30. It is also possible to add additional slots to the seat back portion in order to increase the number of alternate positions available for mounting the head support 90. This may also be true for the head support 40 described previously, depending on the position of the straps 46 and 48 relative to the cover 72.

If desired, horizontal protrusions, discrete bars 100, or the like can be provided on a backside 102 of the seat back portion 24. Each of the straps 92 can be configured to wrap at least partially around such protrusions, bars 100, or the like as generically depicted in FIG. 11. Such a construction may be utilized to provide a more secure attachment of the head support 90 to the seat back portion 24.

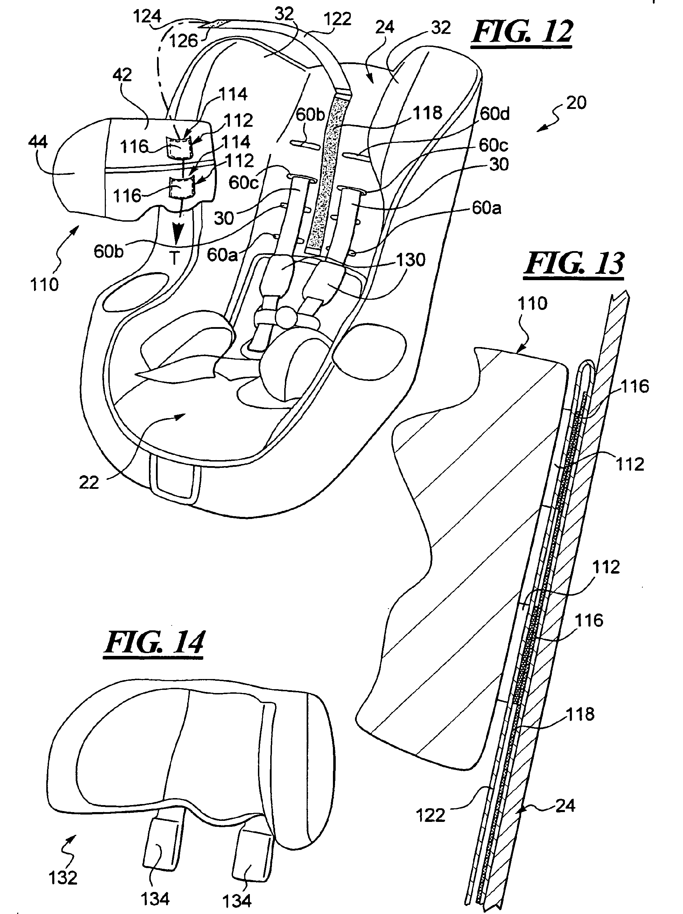

FIGS. 12 and 13 show another example of a head support 110 constructed in accordance with the teachings of the present invention. Again, the head support 110 is very similar in construction to the previously described head supports 40 and 90. Thus, like reference numbers refer to like parts among the various embodiments. In this example, two fabric strips 112 are attached or sewn to and extend horizontally across part of the back side 50 of the head support 110 as shown in FIG. 12. The fabric strips 112 each create a slot 114 or channel between the fabric strip and the back side 50 on the head support 110. In this example, the fabric strips 112 are positioned vertically spaced apart from one another so that the two strips, and thus the two slots or channels 114 are aligned vertically on the back side 50 with one another. The exposed surface on each fabric strip 112 carries a hook part 116 of a hook and loop fastener mechanism in this example.

An elongate strip 118 of the loop part of the hook and loop fastener mechanism is secured vertically along the front side 34 of the seat back portion 24. The strip 118 is positioned in a central region on the seat back portion 24 between the series of slots. The mounting strap in this example is formed, at least in part, as a guide strap 122 coupled to the seat back portion 24. The above-noted fabric strips 112 may also be described as mounting straps. However, the strips of fabric could be eliminated and replaced with some other retention device, if desired. The guide strap 122 is arranged so that is can generally overlie the strip 118 of the loop fastener material. The free end 124 of the guide strap 122 can have a patch 126 of hook material of the hook and loop fastener mechanism to removably secure the free end to or near the bottom of the strip 118. First, the free end 124, as shown in FIGS. 12 and 13, is threaded through each of the slots or channels 114 on the back side 50 of the head support 110 in the direction of the arrow T. Then the patch 126 can be adhered to the bottom of the strip 118 to secure the guide strap 122 in place. The head support 110 can be slid upward and downward along the guide strap 122 while remaining tethered to the seat back portion 24 by the guide strap.

The head support 110 can be secured in any desired vertical position along the seat back portion 24 by pressing the head support, and thus the hook parts 116, against the strip of loop material 118. The hook and loop fastener mechanism will retain the head support 110 in the selected vertical position. To adjust the position, a user need only pull the head support 110 away from the front side 34 of the seat back portion 24 to release the hook and loop fastener mechanism 116, 118. The user can then freely slide the head support 110 upward or downward along the guide strap 122 to adjust the position.

With reference again to FIGS. 1 and 2, safety harnesses often includes harness covers 130 that are slidably secured to the shoulder belts 30. The harness covers 130 assist in adding a soft barrier between the shoulder belts 30 and the skin of the seat occupant. Harness covers 130 are often provided or recommended for use when the seat occupant is a younger child, such as an infant. The typical harness cover 130 is freely slidable along the shoulder belts 30 and independent of other aspects of the car seat 20. Thus, the caregiver can and must properly position the harness covers 130 individually on the shoulder belts 30 after the safety harness 26 has been secured in place over the occupant.

In another example according to the teachings of the present invention, the harness covers can be integrally provided with the head support. Such a head support 132 is illustrated in FIG. 14. Again, the head support 132 is substantially the same as the previously described had supports and, thus, like reference numerals refer to like parts between the various examples. In this example, a pair of harness covers 134 are integrally sewn to or otherwise attached to the removable cover 72 of the head support 132. The harness covers 134 are attached so that they hang from a bottom of the head support 132. In this example, the caregiver can adjust the position of the shoulder straps 30 and the head support 132 to accommodate a specific size child. The harness covers 134 will be automatically positioned along the shoulder belts 30 has a result of being connected to the head support 132.

As is known in the art, the harness covers 134 can be formed as a flap of material that can be folded in half over and around a shoulder belt. The free edges of the material flap can then be secured to one another by any suitable means, such as a hook and loop fastener mechanism. Thus, the harness covers 134 can be opened and closed so that the head support 132 is removable from the car seat 20 and also so that the cover 72 can be completely removed from the core or shell 70 permitting the cover to be washed or replaced.

The disclosed adjustable head supports solve or improve upon the problem of excessive lateral or side-to-side head movement when a child is seated in a child car seat. The adjustable head support can be properly positioned so as to minimize movement of the child's head when the child is secured in the car seat. It is possible that the disclosed head supports can be used on other child seating devices, such as infant carriers and strollers.

For car seat usage, the head supports disclosed herein can include a relatively rigid shell 70 that incorporates energy absorbing technology. The disclosed shell improves the ability of the head support to limit side-to-side head movement of a child's head in comparison to that of a prior art head support comprised of only a soft pad. The adjustability allows the car seat and head rest to accommodate children of different sizes and to adjust as a child grows. The shell or core 70, including the central portion 42 and the side wings 44, can have a suitable thickness or depth in order to reduce the space in which a child's head can move while the child is seated in the car seat. The shell can include a foam core or other energy absorbing technology that can reduce impact forces and increase a child's comfort. The shell of the head support alternatively can be hollow and may have ribs or other internal structures to provide suitable rigidity while remaining light weight. The shell can be flexible to a limited extent.

Some child seats are formed of a one piece design in which the seat back and the seat bottom portion are integrally formed. In certain existing child seats with a two piece design, the seat back portion and the lower seat portion can be formed separately and connected together. An adjustable head support according to the teachings of the invention can be compatible with either a one piece or a two piece child safety seat or car seat.

In the example of FIGS. 12 and 13, as well as the other embodiments, the fabric strips and straps can be made of woven seat belt material for excellent strength and durability. Portions of the various strips and straps could also be covered in soft goods for aesthetic purposes. The vertical guide strap 122 can also be reinforced or have a plastic insert to make it sturdy to limit unwanted movement of the head support when it is installed.

In any of the examples, and particularly the example of FIGS. 10 and 11, the head support could optionally have only one mounting location. That lone location could be determined to accommodate smaller children and not be vertically adjustable. In the same example of FIGS. 10 and 11, the bars 100 could instead be positionally adjustable instead of having a series of optionally selectable bars on the back side 102 of the seat back portion 24. The series of slots may include a plurality of rows of elongate single slots formed in the seat back portion, instead of a series or rows of side-by-side pairs of slots as shown herein. The number of slots in the seat back portion can also vary.

The removable padded cover 72 can be made of various fabrics such as neoprene, polyester, cotton, or any other suitable fabric or a combination thereof. The soft goods cover 72 can be quilted or padded and include multiple layers. The fabric can be chosen for comfort, cushioning, durability, wear resistance, stain resistance, resiliency, and/or for energy absorbing characteristics. The edges of the soft goods can have a fabric binding or cording to help improve comfort and wear. The binding fabric can be nylon, polyester, cotton, or the like and be formed in a contrasting or matching color to the rest of the fabric head support cover. The padded cover 72 can be a one piece construction or can be sewn together from numerous pieces. The cover 72 can also match or contrast with the car seat soft goods cover to provide a pleasing design aesthetic.

The child car seat disclosed herein can be designed to be used with the adjustable head support installed and without the adjustable head support installed. Once a child reaches a certain physical size in which additional head support is no longer necessary or desired, the head support may be removed quickly and easily. In that case, the child car seat may be used safely without the head support.

The disclosed head support can be designed to be used in a singular orientation with one end to be always oriented upwardly. The head support could also be designed with either end oriented upward and thus have a somewhat symmetrical shape from top to bottom, if desired. Such a construction would make it even easier for a user to install the head support on a seat.

## Claims

1. A child seat (20) comprising:
a seat back portion (24);
a series of slots (60a, 60b, 60c, 60d) formed through the seat back portion (24) and spaced vertically apart from
one another;
a safety harness (26) having a pair of shoulder belts (30) positioned on a front side of the seat back portion; and
wherein the shoulder belts (30) are threaded through one or more selected slots of the series of slots to a back side of the seat back portion, **characterised in that** the child seat further comprises a head support (40) having a mounting strap (46, 48),
wherein the head support (40) is removably attached to the seat back portion with the mounting strap (46, 48) threaded through one or more slots of the series of slots.

2. The child seat (20) according to claim 1, wherein each slot (60a, 60b, 60c, 60d) of the series of slots includes a pair of side-by-side spaced apart slots.

3. The child seat (20) according to claim 1 or 2, wherein the child seat is a car seat.

4. The child seat (20) according to any of claims 1 to 3, wherein the shoulder belts (30) are each threaded though one of a first pair of side-by-side slots.

5. The child seat (20) according to claim 4, wherein the head support (40) has a pair of the mounting straps (46, 48) and each of the pair of mounting straps is threaded through one of a second pair of side-by-side slots (60a, 60b, 60c, 60d) directly above the first pair of side-by-side slots.

6. The child seat according to any of claims 1 to 5, wherein the head support (40) has two of the mounting straps.

7. The child seat (20) according to claim 6, wherein the two mounting straps (46, 48) are joined to one another on the back side of the seat back portion (24) when the head supported is secured to the seat back portion.

8. The child seat (20) according to claim 6, wherein the two mounting straps (46, 48) are joined to the seat back portion (24) but not to one another when the head support is secured to the seat back portion.

9. The child seat (20) according to any of claims 6 to 8, wherein the two mounting straps (46, 48) are wrapped at least partly around a bar on the back side of the seat back portion (24).

10. The child seat according to any of claims 6 to 9, wherein one of the two mounting straps (46, 48) carries a ring and the other of the two mounting straps (48, 46) carries a fastening mechanism and is threaded through the ring and secured to itself.

11. The child seat (20) according to claim 10, wherein the fastening mechanism is or comprises a hook and loop fastener with a hook part and a loop part each carried on the other of the two mounting straps.

12. The child seat (20) according to any of claims 1 to 11, wherein the head support (40) has a substantially rigid inner core and a soft goods cover removably received over the inner core.

13. The child seat (20) according to claim 12, wherein the mounting strap (46, 48) is connected to the soft goods cover.

14. A child seat (20), in particular a child car seat, comprising:
a seat back portion (24);
a safety harness (26) having a pair of shoulder belts (30) positioned on a front side of the seat back portion (24); and
a head support (40) separate from the seat back portion (24),
wherein the shoulder belts (30) are height adjustable vertically along the seat back portion, **characterised in that**
the head support (40) is removably attached to the seat back portion (24) with a mounting strap (46, 48) and vertically adjustable positionally along a front side of the seat back portion (24).

15. The child seat (20) according to any of claims 1 to 14, wherein the mounting strap (46, 48) is a guide strap (122) coupled to a central region on the front side of the seat back portion (24), the head support (40) slidable up and down along the guide strap (122).

16. The child seat (20) according to claim 15, wherein the guide strap (122) is received through slots or channels formed in a back side of the head support (40).

17. The child seat (20) according to claim 15 or 16, wherein the head support (40) is retained in a selected position by a hook and loop fastening mechanism carried in part on the seat back portion (24) and in part on a back side of the head support (40).

18. The child seat (20) according to any of claims 1 to 17, in particular according to any of claims 14 to 17, wherein the mounting strap (46, 48) includes two mounting straps on a back side of the head support.

19. The child seat (20) according to claim 18, wherein the seat back portion (24) has a series of slots (60a, 60b, 60c, 60d) formed through the seat back portion (24) and spaced vertically apart from one another, wherein the shoulder belts are threaded through one or more selected slots of the series of slots to a back side of the seat back portion, and wherein the two mounting straps (46, 48) are threaded through one or more chosen slots of the series of slots directly above the one or more selected slots.

20. The child seat (20) according to any of claims 1 to 19, in particular according to any of claims 14 to 19, wherein the seat back portion (24) has a series of slots (60a, 60b, 60c, 60d) formed through the seat back portion (24) and spaced vertically apart from one another, and wherein the mounting strap (46, 48) includes two or more straps threaded through one or more chosen slots of the series of slots to a back side of the seat back portion.

## Patentansprüche

1. Kindersitz (20), umfassend:
ein Sitzrückenteil (24);
eine Reihe von durch das Sitzrückenteil (24) hindurchgehend ausgebildeten und vertikal zueinander beabstandeten Schlitzen (60a, 60b, 60c, 60d);
ein Sicherheitsgurtzeug (26) mit einem Paar auf einer Vorderseite des Sitzrückenteils positionierten Schultergurten (30); und
wobei die Schultergurte (30) durch einen oder mehrere ausgewählte Schlitze der Reihe von Schlitzen hindurch auf eine Rückseite des Sitzrückenteils gefädelt sind, **dadurch gekennzeichnet, dass** der Kindersitz weiterhin eine Kopfstütze (40) mit einem Befestigungsriemen (46, 48) umfasst,
wobei die Kopfstütze (40) abnehmbar an dem Sitzrückenteil angebracht ist und der Befestigungsriemen (46, 48) dabei durch einen oder mehrere Schlitze der Reihe von Schlitzen gefädelt ist.

2. Kindersitz (20) nach Anspruch 1, wobei jeder Schlitz (60a, 60b, 60c, 60d) der Reihe von Schlitzen ein Paar nebeneinander befindlicher zueinander beabstandeter Schlitze einschließt.

3. Kindersitz (20) nach Anspruch 1 oder 2, wobei der Kindersitz ein Autositz ist.

4. Kindersitz (20) nach einem der Ansprüche 1 bis 3, wobei die Schultergurte (30) jeweils durch ein erstes Paar nebeneinander befindlicher Schlitze gefädelt sind.

5. Kindersitz (20) nach Anspruch 4, wobei die Kopfstütze (40) ein Paar der Befestigungsriemen (46, 48) aufweist und jeder Befestigungsriemen des Paares jeweils durch ein zweites Paar nebeneinander befindlicher Schlitze (60a, 60b, 60c, 60d) unmittelbar über dem ersten Paar nebeneinander befindlicher Schlitze gefädelt ist.

6. Kindersitz nach einem der Ansprüche 1 bis 5, wobei die Kopfstütze (40) zwei der Befestigungsriemen aufweist.

7. Kindersitz (20) nach Anspruch 6, wobei die beiden Befestigungsriemen (46, 48) miteinander auf der Rückseite des Sitzrückenteils (24) verbunden sind, wenn die Kopfstütze an dem Sitzrückenteil befestigt ist.

8. Kindersitz (20) nach Anspruch 6, wobei die beiden Befestigungsriemen (46, 48) mit dem Sitzrückenteil (24), jedoch nicht miteinander, verbunden sind, wenn die Kopfstütze an dem Sitzrückenteil befestigt ist.

9. Kindersitz (20) nach einem der Ansprüche 6 bis 8, wobei die beiden Befestigungsriemen (46, 48) zumindest teilweise um eine Stange auf der Rückseite des Sitzrückenteils (24) gewickelt sind.

10. Kindersitz nach einem der Ansprüche 6 bis 9, wobei einer der beiden Befestigungsriemen (46, 48) einen Ring trägt und der andere der beiden Befestigungsriemen (46, 48) einen Befestigungsmechanismus trägt und durch den Ring gefädelt und an sich selbst befestigt ist.

11. Kindersitz (20) nach Anspruch 10, wobei der Befestigungsmechanismus ein Klettverschluss ist oder einen solchen umfasst, mit einem Hakenteil und einem Schlaufenteil, die auf dem jeweils anderen der beiden Befestigungsriemen vorhanden sind.

12. Kindersitz (20) nach einem der Ansprüche 1 bis 11, wobei die Kopfstütze (40) einen im Wesentlichen starren inneren Kern und einen abnehmbar über dem inneren Kern aufgenommenen Textilbezug aufweist.

13. Kindersitz (20) nach Anspruch 12, wobei der Befestigungsriemen (46, 48) mit dem Textilbezug verbunden ist.

14. Kindersitz (20), insbesondere ein Autokindersitz, umfassend:
ein Sitzrückenteil (24);
ein Sicherheitsgurtzeug (26) mit einem Paar auf einer Vorderseite des Sitzrückenteils (24) positionierten Schultergurten (30); und
eine von dem Sitzrückenteil (24) getrennte Kopfstütze (40),
wobei die Schultergurte (30) vertikal entlang dem Sitzrückenteil höhenverstellbar sind, **dadurch gekennzeichnet, dass**
die Kopfstütze (40) mit einem Befestigungsriemen (46, 48) abnehmbar an dem Sitzrückenteil (24) befestigt ist und in ihrer Position entlang einer Vorderseite des Sitzrückenteils (24) vertikal verstellbar ist.

15. Kindersitz (20) nach einem der Ansprüche 1 bis 14, wobei der Befestigungsriemen (46, 48) ein Führungsriemen (122) ist, der an einen zentralen Bereich auf der Vorderseite des Sitzrückenteils (24) gekoppelt ist, wobei die Kopfstütze (40) den Führungsriemen (122) entlang herauf- und herabschiebbar ist.

16. Kindersitz (20) nach Anspruch 15, wobei der Führungsriemen (122) durch in einer Rückseite der Kopfstütze (40) ausgebildete Schlitze oder Kanäle aufgenommen ist.

17. Der Kindersitz (20) nach Anspruch 15 oder 16, wobei die Kopfstütze (40) durch einen Klettverschlussmechanismus, der teilweise auf dem Sitzrückenteil (24) und teilweise auf einer Rückseite der Kopfstütze vorhanden ist, in einer ausgewählten Position gehalten wird.

18. Kindersitz (20) nach einem der Ansprüche 1 bis 17, insbesondere nach einem der Ansprüche 14 bis 17, wobei der Befestigungsriemen (46, 48) zwei Befestigungsriemen auf einer Rückseite der Kopfstütze einschließt.

19. Kindersitz (20) nach Anspruch 18, wobei das Sitzrückenteil (24) eine Reihe von durch das Sitzrückenteil (24) hindurchgehend ausgebildeten und vertikal zueinander beabstandeten Schlitzen (60a, 60b, 60c, 60d) aufweist, wobei die Schultergurte durch einen oder mehrere ausgewählte Schlitze der Reihe von Schlitzen hindurch auf eine Rückseite des Sitzrückenteils gefädelt sind, und wobei die beiden Befestigungsriemen (46, 48) durch einen oder mehrere gewählte Schlitze der Reihe von Schlitzen unmittelbar über dem einen oder den mehreren ausgwählten Schlitzen gefädelt sind.

20. Kindersitz (20) nach einem der Ansprüche 1 bis 19, insbesondere nach einem der Ansprüche 14 bis 19, wobei das Sitzrückenteil (24) eine Reihe von durch das Sitzrückenteil (24) hindurchgehend ausgebildeten und vertikal zueinander beabstandeten Schlitzen (60a, 60b, 60c, 60d) aufweist, und wobei der Befestigungsriemen zwei oder mehr Riemen einschließt, die durch einen oder mehrere gewählte Schlitze der Reihe von Schlitzen hindurch auf eine Rückseite des Sitzrückenteils gefädelt sind

## Revendications

1. Siège pour enfant (20), comprenant :
une portion arrière de siège (24) ;
une série de fentes (60a, 60b, 60c, 60d) formées à travers la portion arrière de siège (24) et espacées les unes des autres verticalement ;
un harnais de sécurité (26) ayant une paire de ceintures diagonales (30) positionnées sur un côté frontal de la portion arrière de siège ;
les ceintures diagonales (30) étant enfilées à travers une ou plusieurs fentes sélectionnées de la série de fentes vers un côté arrière de la portion arrière de siège, **caractérisé en ce que** le siège pour enfant comprend également un support de tête (40) ayant une sangle de montage (46, 48),
le support de tête (40) étant attaché de façon amovible à la portion arrière de siège avec la sangle de montage (46, 48) enfilée à travers une ou plusieurs fentes de la série de fentes.

2. Siège pour enfant (20) selon la revendication 1, chaque fente (60a, 60b, 60c, 60d) de la série de fentes incluant une paire de fentes espacées côte à côte.

3. Siège pour enfant (20) selon la revendication 1 ou 2, le siège pour enfant étant un siège de voiture.

4. Siège pour enfant (20) selon l'une quelconque des revendications 1 à 3, les ceintures diagonales (30) étant enfilées chacune à travers une fente d'une première paire de fentes côte à côte.

5. Siège pour enfant (20) selon la revendication 4, le support de tête (40) ayant une paire des sangles de montage (46, 48) et chaque sangle de la paire de sangles de montage étant enfilée à travers une fente d'une deuxième paire de fente (60a, 60b, 60c, 60d) côte à côte directement au-dessus de la première paire de fentes côte à côte.

6. Siège pour enfant (20) selon l'une quelconque des revendications 1 à 5, le support de tête (40) ayant deux des sangles de montage.

7. Siège pour enfant (20) selon la revendication 6, les deux sangles de montage (46, 48) étant réunies l'une à l'autre sur le côté arrière de la portion arrière de siège (24) quand le support de tête est fixé à la portion arrière de siège.

8. Siège pour enfant (20) selon la revendication 6, les deux sangles de montage (46, 48) étant réunies à la portion arrière de siège (24) mais pas l'une à l'autre quand le support de tête est fixé à la portion arrière de siège.

9. Siège pour enfant (20) selon l'une quelconque des revendications 6 à 8, les deux sangles de montage (46, 48) étant enroulées au moins partiellement autour d'une barre sur le côté arrière de la portion arrière de siège (24).

10. Siège pour enfant (20) selon l'une quelconque des revendications 6 à 9, une des deux sangles de montage (46, 48) portant un anneau, et l'autre des deux sangles de montage (48, 46) portant un mécanisme de fixation et étant enfilée à travers l'anneau et fixée à elle-même.

11. Siège pour enfant (20) selon la revendication 10, le mécanisme de fixation étant ou comprenant une fermeture à boucle et crochet avec une partie de crochet et une partie de boucle portées chacune sur l'autre des deux sangles de montage.

12. Siège pour enfant (20) selon l'une quelconque des revendications 1 à 11, le support de tête (40) ayant un noyau intérieur essentiellement rigide et un recouvrement en matière douce logé de façon amovible sur le noyau intérieur.

13. Siège pour enfant (20) selon la revendication 12, la sangle de montage (46, 48) étant raccordée au recouvrement en matière douce.

14. Siège pour enfant (20), en particulier un siège de voiture, comprenant :
une portion arrière de siège (24) ;
un harnais de sécurité (26) ayant une paire de ceintures diagonales (30) positionnées sur un côté frontal de la portion arrière de siège (24), et
un support de tête (40) séparé de la portion arrière de siège (24),
les ceintures diagonales (30) étant réglables en hauteur verticalement le long de la portion arrière de siège,
**caractérisé en ce que**
le support de tête (40) est attaché de façon amovible à la portion arrière de siège (24) avec une sangle de montage (46, 48) et réglable verticalement en position le long d'un côté frontal de la portion arrière de siège (24).

15. Siège pour enfant (20) selon l'une quelconque des revendications 1 à 14, la sangle de montage (46, 48) étant une sangle de guidage (122) couplée à une région centrale sur le côté frontal de la portion arrière de siège (24), le support de tête (40) pouvant coulisser vers le haut et vers le bas le long de la sangle de guidage (122).

16. Siège pour enfant (20) selon la revendication 15, la sangle de guidage (122) étant reçue à travers des fentes ou rainures formées dans le côté arrière du support de tête (40).

17. Siège pour enfant (20) selon la revendication 15 ou 16, le support de tête (40) étant retenu dans une position sélectionnée par un mécanisme de fixation à boucle et crochet porté en partie sur la portion arrière de siège (24) et en partie sur un côté arrière du support de tête (40).

18. Siège pour enfant (20) selon l'une quelconque des revendications 1 à 17, en particulier selon l'une quelconque des revendications 14 à 17, la sangle de montage (46, 48) incluant deux sangles de montage sur un côté arrière du support de tête.

19. Siège pour enfant (20) selon la revendication 18, la portion arrière de siège (24) ayant une série de fentes (60a, 60b, 60c, 60d) formées à travers la portion arrière de siège (24) et espacées verticalement les unes des autres, les ceintures diagonales étant enfilées à travers une ou plusieurs fentes sélectionnées de la série de fentes vers un côté arrière de la portion arrière de siège, et les deux sangles de montage (46, 48) étant enfilées à travers une ou plusieurs fentes choisies de la série de fentes directement au-dessus d'une ou de plusieurs fentes sélectionnées.

20. Siège pour enfant (20) selon l'une quelconque des revendications 1 à 19, en particulier selon l'une quelconque des revendications 14 à 19, la portion arrière de siège (24) ayant une série de fentes (60a, 60b, 60c, 60d) formées à travers la portion arrière de siège (24) et espacées verticalement les unes des autres, et la sangle de montage (46, 48) incluant deux ou plusieurs sangles enfilées à travers une ou plusieurs fentes choisies de la série de fentes vers un côté arrière de la portion arrière de siège.
